# EUROPÄISCHE PATENTANMELDUNG

(11) **EP 3 805 884 A1**
(43) Veröffentlichungstag der Anmeldung: **14.04.2021**
(21) Anmeldenummer: 19202803.3
(22) Anmeldetag: 11.10.2019
(51) Int. Cl.: G05B 23/02

(54) **VERFAHREN ZUR BESTIMMUNG UND/ODER KLASSIFIZIERUNG EINES BAHNZUSTANDS EINER WARENBAHN, COMPUTERPROGRAMMPRODUKT, VORRICHTUNG ZUR HERSTELLUNG UND INDUSTRIELLE ANLAGE**

(71) Anmelder: Siemens Aktiengesellschaft, 80333 München (DE)
(72) Erfinder: Kögl, Stefan, 94365 Parkstetten (DE); Amschler, Benjamin, 95500 Heinersreuth (DE); Hofmann, Steffen, 91058 Erlangen (DE); Meier, Stefan Ingo, 91052 Erlangen (DE)

(57) **Zusammenfassung**

Die Erfindung betrifft ein Verfahren zur Bestimmung und/oder Klassifizierung eines Bahnzustands (BZ) einer Warenbahn (1) in einer Vorrichtung, wobei die Warenbahn (1) mit mehreren Motoren (5) über mehrere Umlenkrollen (3, 3') mit einer Bahngeschwindigkeit (v) bewegt wird, wobei der jeweilige Motor (5) mit einer Drehgeschwindigkeit (w) und einem Drehmoment (D) mindestens eine der Umlenkrollen (3, 3') antreibt, wobei Momentanwerte (MW) mindestens eines Betriebsparameters (BP) mindestens eines Motors (5) erfasst und einem Bestimmungs- und/oder Klassifizierungsmodul (11) zugeführt werden, welches die erfassten Momentanwerte (MW) des mindestens einen Betriebsparameters (BP) anhand eines Lernmodells (13) analysiert und anhand dieser Analyse einen Bahnzustand (BZ) der Warenbahn (1) bestimmt und/oder klassifiziert.

## Beschreibung

Die Erfindung betrifft ein Verfahren zur Bestimmung und/oder Klassifizierung eines Bahnzustands einer Warenbahn in einer Transporteinrichtung und/oder in einer Bearbeitungsmaschine. Weiter betrifft die Erfindung ein Computerprogrammprodukt. Darüber hinaus betrifft die Erfindung eine Vorrichtung zur Herstellung einer Warenbahn und eine industrielle Anlage.

Bisher wurden zur Bestimmung eines Bahnzustands einer Warenbahn, zum Beispiel einer Bahnspannung einer Warenbahn, insbesondere einer Zellstoff-haltigen Warenbahn in einer Papiermaschine, eine Zugmessdose oder mehrere Zugmessdosen sowie Lichtschranken verwendet.

Zugmessdosen haben den Nachteil, dass sie störanfällig, teuer und, je nach Anwendungsgebiet, zu ungenau sind. Überdies kann dabei der Bahnzustand nur an festgelegten Punkten bestimmt werden.

Der Erfindung liegt die Aufgabe zugrunde, einen Zustand einer Warenbahn einfach und schnell zu bestimmen.

Die Aufgabe wird erfindungsgemäß durch ein Verfahren nach Patentanspruch 1 und durch ein Computerprogrammprodukt nach Patentanspruch 9 gelöst.

Darüber hinaus wird die Aufgabe durch eine Vorrichtung gemäß Patentanspruch 10 sowie durch eine industrielle Anlage gemäß Patentanspruch 11 gelöst.

Vorteilhafte Ausgestaltungen der Erfindung sind Gegenstand der abhängigen Patentansprüche.

Insbesondere zur Vermeidung von Rissbildungen oder eines Bahnabrisses wird vorgeschlagen, einen aktuellen und/oder zukünftigen Bahnzustand, insbesondere einen aktuellen kritischen und/oder einen zukünftigen kritischen Bahnzustand, der Warenbahn sensorlos mit Hilfe eines Lernmodells zu bestimmen.

Der Erfindung liegt die Erkenntnis zugrunde, dass ein Betriebsparameter eines Antriebs, insbesondere eines Motors zur Förderung der Warenbahn, bereitsteht und dass dieser bekannte und gemessene oder abgeleitete Betriebsparameter, wie zum Beispiel eine Drehgeschwindigkeit und/oder ein Drehmoment eines Motors, die Bewegung der Warenbahn beeinflusst und ausführt. Durch die Verwendung des bekannten Betriebsparameters des Motors kann das bisher für die Bahnabrissbestimmung üblicherweise verwendete sensorbasierte Verfahren beispielsweise mittels Zugmessdose oder optischer Kamera entfallen.

Bei dem Verfahren zur Bestimmung und/oder Klassifizierung eines Bahnzustands einer Warenbahn in einer Transporteinrichtung und/oder in einer Bearbeitungsmaschine wird die Warenbahn mit mehreren Motoren über mehrere Walzen oder Umlenkrollen mit einer Bahngeschwindigkeit bewegt, wobei der jeweilige Motor mit einer Drehgeschwindigkeit und einem Drehmoment mindestens eine der Umlenkrollen antreibt, und wobei Momentanwerte mindestens eines Betriebsparameters mindestens eines Motors erfasst und einem Bestimmungs- und/oder Klassifizierungsmodul zugeführt werden, welches die erfassten Momentanwerte des mindestens einen Betriebsparameters anhand eines Lernmodells analysiert und anhand dieser Analyse einen Bahnzustand, wie zum Beispiel einen aktuellen und/oder künftigen Bahnzustand, der Warenbahn, insbesondere einen aktuellen kritischen und/oder einen zukünftigen kritischen Bahnzustand der Warenbahn, bestimmt und/oder klassifiziert.

Das Verfahren arbeitet sensorlos und unterliegt keinem mechanischen Verschleiß, wodurch Wartungsaufwand und Folgekosten deutlich reduziert sind. Das Verfahren verwendet dabei bereits vorhandene Daten, nämlich Betriebsparameter des Antriebs, wie die Drehgeschwindigkeit und/oder das Drehmoment eines Motors, welche üblicherweise bei einer Antriebsregelung benutzt werden. Somit entfallen zusätzliche Datenerfassungen und Sensoren. Durch die Verwendung von Betriebsparametern mindestens eines Motors eines Mehrmotorenantriebs kann als Bahnzustand, insbesondere als aktueller und/oder zukünftiger Bahnzustand, beispielsweise ein Bahnabriss fast in Echtzeit oder frühzeitig noch vor einem Auftreten identifiziert werden. Somit sind Stillstandszeiten und ein möglicher Produktionsausfall durch einen Bahnabriss reduziert.

Unter der Bestimmung oder Klassifizierung eines Bahnzustands, wie eines aktuellen und/oder künftigen Bahnzustands, einer Warenbahn wird insbesondere die Bestimmung einer Anomalie der Warenbahn und damit die Bestimmung und/oder Klassifizierung eines kritischen Bahnzustands anhand der ermittelten Anomalien bei der Herstellung der Warenbahn verstanden. Als ein kritischer Bahnzustand der Warenbahn kann beispielsweise ein aktueller oder ein möglicher oder sich anbahnender Bahnabriss bestimmt und/oder klassifiziert werden.

Je nach Größe und Art einer Vorrichtung zur Herstellung der Warenbahn kann die Vorrichtung mehrere Motoren umfassen, wobei je Motor mindestens ein Betriebsparameter erfasst wird.

Unter Betriebsparameter werden insbesondere Antriebsparameter, wie zum Beispiel Drehgeschwindigkeit, Drehmoment und/oder Soll-Geschwindigkeit, eines jeweiligen Motors verstanden. Dabei werden bei einem Mehrmotorenantrieb mit mehreren Motoren je Motor mindestens ein Betriebsparameter, insbesondere der gleiche Betriebsparameter, ermittelt oder erfasst. Durch die Verwendung und Verarbeitung von Antriebsdaten mittels Betriebsparameter des Motors (wie Drehzahl, Drehmoment, Drehgeschwindigkeit) einer Vorrichtung zur Herstellung einer durchlaufenden Warenbahn können mittels des Lernmodells unterschiedliche Betriebssituationen oder Betriebszustände des Motors im Hinblick auf einen möglichen zukünftigen Bahnabriss oder einen normalen Betriebszustand bestimmt und klassifiziert werden.

Unter einem Lernmodell wird insbesondere ein Modell zur Beschreibung und Beobachtung mindestens eines Motors eines Mehrmotorenantriebs einer Vorrichtung zur Herstellung einer Warenbahn verstanden, wobei das Lernmodell ein oder mehrere Motoren und ein oder mehrere Betriebsparameter des einen oder der mehreren Motors/en berücksichtigt und beinhaltet. Dabei kann das Lernmodell durch die Nutzung von momentanen Werten und historischen Werten des Betriebsparameters fortlaufend hinzulernen. Das Lernmodell kann dabei verschiedene Ansätze eines überwachten, eines unüberwachten und/oder bestärkenden Lernens nutzen. Bevorzugt wird der Ansatz eines überwachten Lernens durch einmaliges Antrainieren oder Aktualisierung des Lernmodells anhand von Momentanwerten oder aktuellen Werten und Markierungen (auch Labels genannt) dieser mit Vergangenheitswerten oder historischen Werten benutzt.

Die Identifizierung eines aktuellen und/oder zukünftigen Bahnzustandes, insbesondere eines aktuellen und/oder möglichen zukünftigen Bahnabrisses, ist mittels des Lernmodells in unterschiedlicher Genauigkeit möglich. Als Verfahren zum maschinellen Lernen wendet das Lernmodell beispielsweise eines oder mehrere der nachfolgenden Verfahren in Kombination an: Gaussian Naive Bayes, Logistic Regression, Support Vector Machine, Principal Component Analysis mit anschließender Klassifikation, k-means clustering, k-nearest neighbor, Decision Tree, Random Forest, Neural Network (Klassifikation), Neural Network (Regression mit anschließender Klassifikation), Autoencoder, Gated Recurrent Unit, Long Short-Term Memory und weitere. Durch die Kombination einiger dieser Verfahren als Grundlage für das Lernmodell lassen sich Genauigkeit, Langzeitstabilität und Reaktionszeit bei der Bestimmung des zukünftigen Bahnzustandes weiter optimieren.

Zum Anlernen oder zum Training des Lernmodells werden beispielsweise historische Parameterverläufe und/oder historisehe Änderungsverläufe des mindestens einen Betriebsparameters des mindestens einen Motors, gegebenenfalls mit mindestens einer Markierung im Rahmen eines überwachten Lernens, erfasst, vorverarbeitet und dem Lernmodell zugeführt. Darüber hinaus können diese historischen Parameterverläufe und/oder historischen Änderungsverläufe des mindestens einen Betriebsparameters des mindestens einen Motors auch anhand aktuell erfasster Betriebsparameter fortlaufend dem Lernmodell zur Klassifizierung, insbesondere zur Echtzeitklassifizierung zugeführtwerden. In einer weiteren Ausführungsform ist vorgesehen, dass eine erste Ableitung des mindestens einen Betriebsparameters gebildet wird. Hierdurch können momentane oder historische Änderungen des Betriebsparameters einfach und schnell bestimmt werden. Insbesondere können die ermittelten momentanen oder historischen Änderungen des Betriebsparameters für weitere Analysen, wie zum Beispiel für Grenzwertbetrachtungen, verwendet werden.

Ein weiterer Aspekt sieht vor, dass anhand zeitlich nacheinander erfasster Momentanwerte des mindestens einen Betriebsparameters ein zeitlicher Momentanwertverlauf dieses Betriebsparameters bestimmt wird und mit einem zugehörigen historischen Parameterverlauf dieses Betriebsparameters des Lernmodells verglichen wird und anhand dieses Verlaufvergleichs der künftige Bahnzustand bestimmt und/oder klassifiziert wird. Als Momentanwert oder aktueller Wert des Betriebsparameters wird beispielsweise ein Drehmoment eines der Motoren und/oder eine Drehgeschwindigkeit eines der Motoren erfasst und mit einem Grenzwert verglichen und beispielsweise bei Überschreitung eines oberen Grenzwertes für das Drehmoment auf eine Rissbildung geschlossen.

Darüber hinaus kann ein Lernmodell anhand von historischen Parameterverläufen die Motoren im Hinblick auf ihre Relevanz für den zu ermittelnden Bahnzustand klassifizieren und/oder selektieren. Insbesondere wird oder ist für den jeweiligen Motor ein Klassifikationswert im Lernmodell hinterlegt. Beispielsweise werden anhand der historischen Parameterverläufe diejenigen Motoren identifiziert, anhand derer Parameterverläufe ein kritischer Bahnzustand sicher und schnell bestimmt und/oder klassifiziert werden kann. Solche Motoren sind insbesondere die Antriebsmotoren der Umlenkrollen. Diese werden als hoch relevant oder relevant klassifiziert und bei der Prognose des zukünftigen Bahnzustandes berücksichtigt und damit selektiert. Hingegen werden Motoren, welche Hilfsantriebe für eine Pumpe oder andere Einrichtungen sind, als weniger oder nicht relevant klassifiziert und bei der Prognose des zukünftigen Bahnzustands nicht berücksichtigt und damit nicht selektiert. Auch können Motoren manuell selektiert werden.

Des Weiteren können ein erster Momentanwertverlauf eines Betriebsparameters eines ersten Motors und ein zweiter Momentanwertverlauf eines gleichen Betriebsparameters eines dem ersten Motor benachbarten zweiten Motors erfasst werden sowie Änderungen zwischen dem ersten Momentanwertverlauf und dem zweiten Momentanwertverlauf ermittelt werden und anhand der ermittelten Änderung der künftige Bahnzustand der Warenbahn bestimmt und/oder klassifiziert werden. Kommt es beispielsweise zu einer zu großen Änderung zwischen dem ersten Momentanwertverlauf des ersten Motors und dem zweiten Momentanwertverlauf des zweiten Motors, so wird bei Überschreitung eines Grenzwertes für die ermittelten Änderungen auf einen aktuellen oder möglichen zukünftigen Bahnabriss geschlossen und ein solcher bestimmt. Eine solche große Änderung bedeutet, dass der Motor die Drehzahl an einem Aufroller für die Warenbahn nicht mehr nach dem Zug der Warenbahn regelt, da zum aktuellen Zeitpunkt die Umlenkrolle oder Walze keine Warenbahn mehr führt.

Eine übliche Zugregelung wird dabei durch die zugehörige Regelungslogik deaktiviert, wenn beispielsweise ein Zug-Istwert über eine Istwert-Glättung von einer Sekunde hinweg den Grenz- oder Schwellwert eines Zehntels eines Zug-Nominalwerts (10 Prozent von beispielsweise 1.500 N/m) unterschreitet und dies für weitere fünf Sekunden tut, da nach Ablauf von in Summe sechs Sekunden davon ausgegangen wird, dass kein normaler Herstellungsprozess mehr abläuft und demzufolge die Zugregelung automatisch nach sechs Sekunden deaktiviert wird. Da das Lernmodell bereits nach Erkennung der Abweichung oder Änderung einen kritischen Bahnzustand vorhersagt, erfolgt die Erkennung des kritischen Bahnzustands zumindest fünf Sekunden vor einer Deaktivierung der Zugregelung und vor einer Detektierung durch eine Zugmessdose oder einen optischen Sensor und somit möglichst früh vor einem möglichen Bahnabriss.

Eine weitere Ausführungsform sieht vor, dass eine ermittelte Änderung durch ein angelerntes Lernmodell bewertet wird und anhand dieses Änderungsvergleichs der Bahnzustand der Warenbahn bestimmt und/oder klassifiziert wird. Beispielsweise können so Anomalien von einzelnen Motoren identifiziert werden und anhand dieser auf einen Bahnzustand, wie einen aktuellen oder zukünftigen kritischen Bahnzustand, geschlossen werden.

Darüber hinaus sieht das Verfahren vor, dass das Lernmodell anhand mindestens einer der folgenden Werte, insbesondere der erfassten Momentanwerte, der Momentwertverläufe, der Änderungsverläufe, der historischen Parameterverläufe und/oder der historischen Änderungsverläufe und/oder des bestimmten Bahnzustands, fortlaufend auf Richtigkeit geprüft und neu bewertet und angelernt wird. Insbesondere wird das Lernmodell anhand einer der genannten Werte, insbesondere anhand von Momentanwerten, überprüft, wobei bei Unterschreiten oder Überschreiten von Grenzwerten beispielsweise auf kritische Zustände von Betriebsparametern des Motors und/oder auf einen Anfahr- oder Ausschaltzyklus des Motors oder auf einen ausgetauschten Motor geschlossen wird und entsprechend deren Einfluss auf einen zukünftigen Bahnzustand, insbesondere einen kritischen Bahnzustand, geschlossen wird.

Für eine Evaluierung des Lernmodells, insbesondere eine erste Evaluierungsstufe, ist darüber hinaus beispielsweise vorgesehen, dass für einen vorgegebenen historischen Zeitbereich die für diesen Zeitbereich mittels des Lernmodells bestimmten und/oder klassifizierten Bahnzustände mit den in diesem Zeitbereich tatsächlich gemessenen Bahnzuständen verglichen werden und aus diesem Vergleich ein Genauigkeitswert für das Lernmodell bestimmt wird.

Bei starker Abweichung, also wenn der Genauigkeitswert einen vorgegebenen Wert unter- oder überschreitet, wird das Lernmodell korrigiert oder aktualisiert. Also, wenn beispielsweise eine Rissdetektion erfolgte, aber kein Bahnabriss eintrat oder wenn keine Bahnabrissdetektion erfolgte und dennoch ein Bahnabriss eintrat, wird identifiziert, dass das Lernmodell nicht hinreichend genau einen aktuellen oder zukünftigen Bahnabriss bestimmt und beispielsweise daraus geschlossen, das Lernmodell neu anzulernen oder zu deaktivieren.

Des Weiteren kann für eine weitere Evaluierung des Lernmodells, zum Beispiel für eine zweite Evaluierungsstufe, eine Zeitdifferenz zwischen dem Zeitpunkt der Bestimmung eines kritischen Bahnzustandes mittels des Lernmodells und dem Zeitpunkt einer wegen eines tatsächlichen kritischen Bahnzustandes erfolgten Deaktivierung einer der Komponenten der Vorrichtung, wie zum Beispiel der Transporteinrichtung oder der Bearbeitungsmaschine (zum Beispiel Deaktivierung der Zugregelung der Warenbahn), bestimmt werden, wobei anhand dieser Zeitdifferenz ein Reaktionszeitklassifikator bestimmt wird.

Darüber hinaus kann die Evaluierung des Lernmodells in einem Langzeittest wiederholt und das Lernmodell erneut evaluiert werden. Hierdurch kann beispielsweise ein möglicher Einfluss einer Änderung einer Maschinenkonfiguration, zum Beispiel wenn ein neuer Motor oder eine neue Walze in der Vorrichtung hinzukommt oder vorhandene Motoren oder Walzen in der Vorrichtung ausgetauscht werden, ermittelt werden und mit einem neuen Training des Lernmodells minimiert werden.

Vorzugsweise ist ein Computerprogrammprodukt vorgesehen, das dazu ausgebildet ist, das Verfahren auf einer Steuereinrichtung und/oder auf einer, der Steuereinrichtung zugeordneten Recheneinheit auszuführen und/oder auf eine solche Steuereinrichtung adaptiert wird. Mit Hilfe des Computerprogrammprodukts wird die Herstellung der Warenbahn unterstützt oder ausgeführt.

Die Vorrichtung zur Herstellung einer Warenbahn weist mindestens eine Umlenkrolle, zumindest einen Motor und eine Steuereinrichtung auf, wobei die Steuereinrichtung die Herstellung der Warenbahn in Abhängigkeit von dem mittels des zuvor beschriebenen Verfahrens bestimmten Bahnzustand steuert oder regelt. Die Steuereinrichtung kann auch als Mikrocomputer ausgestaltet sein.

Anwendbar ist die Erfindung insbesondere dort, wo die Messung des Bahnzustands einer Warenbahn schwer möglich ist oder aus Kostengründen auf zusätzliche Messsensorik verzichtet werden soll.

Die genannte Vorrichtung zur Herstellung der Warenbahn ist insbesondere in einer industriellen Anlage, insbesondere in einer Papiermaschine, implementiert.

Die oben beschriebenen Eigenschaften, Merkmale und Vorteile dieser Erfindung sowie die Art und Weise, wie diese erreicht werden, werden klarer und deutlicher verständlich im Zusammenhang mit der folgenden Beschreibung von Ausführungsbeispielen, die im Zusammenhang mit den Zeichnungen näher erläutert werden. Dabei zeigen:
- FIG 1: schematisch eine Industrieanlage mit einer Vorrichtung zur Herstellung einer Warenbahn,
- FIG 2: ein Diagramm mit mehreren historischen Parameterverläufen eines Betriebsparameters für mehrere ausgewählte Motoren,
- FIG 3, 4: schematisch ein Ausführungsbespiel zum Validieren eines Lernmodells mittels einer Klassifikationsmatrix,
- FIG 5: ein Bespiel zum Validieren des Lernmodells mittels einer Reaktionszeitevaluierung und einer Langzeitstabilitätsevaluierung eines Reaktionszeitklassifikators.

Einander entsprechende Teile sind in allen Figuren mit den gleichen Bezugszeichen versehen.

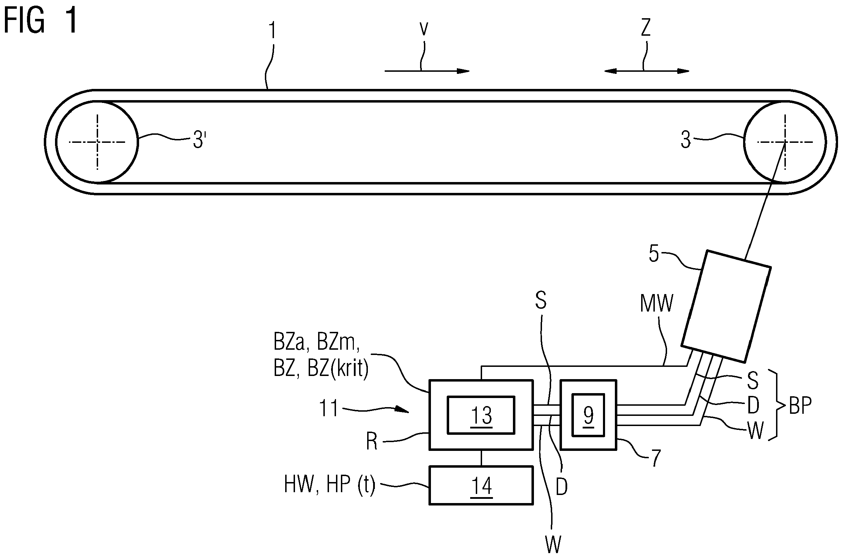

FIG 1 zeigt eine Vorrichtung zur Herstellung einer Warenbahn 1. Bei der Warenbahn 1 handelt es sich beispielsweise um eine Zellulose-haltige Bahn, insbesondere eine Papierbahn, oder um eine Schlauchbeutel-Bahn.

Die Vorrichtung umfasst zwei Umlenkrollen 3, 3'. Die Warenbahn 1 wird über die zwei Umlenkrollen 3, 3' geführt.

Zur Führung der Warenbahn 1 über die zwei Umlenkrollen 3, 3' ist ein Antrieb vorgesehen, der beispielsweise als ein Motorenantrieb ausgebildet ist.

Beispielsweise ist die Umlenkrolle 3 als ein angetriebenes Umlenkelement ausgebildet. Dazu ist die Umlenkrolle 3 mit einem Motor 5 des Antriebs verbunden. Die Umlenkrolle 3' ist als ein nicht angetriebenes Umlenkelement ausgebildet.

Die Darstellung der Vorrichtung zur Herstellung der Warenbahn 1 ist vereinfacht. So kann die Vorrichtung Teil einer Industrieanlage, insbesondere einer Papiermaschine, sein. Der Antrieb kann als ein Mehrmotorenantrieb ausgebildet sein, der mehrere Motoren 5 und mehrere Umlenkrollen 3, 3' umfasst, welche zur Bearbeitung der Warenbahn 1 diese in der Vorrichtung führen und transportieren.

Die Warenbahn 1 wird über die angetriebene Umlenkrolle 3 und die nicht angetriebene Umlenkrolle 3' geführt. Die Warenbahn 1 wird dabei mit einer Geschwindigkeit v bewegt. Die Warenbahn 1 wird dabei durch den Motor 5 über die angetriebene Umlenkrolle 3 bewegt. Dazu beaufschlagt der Motor 5 die angetriebene Umlenkrolle 3 mit einem Drehmoment D. Durch den Motor 5 angetrieben, bewegt sich die Umlenkrolle 3, 3' mit einer Drehgeschwindigkeit w. Der Motor 5 wird mit Hilfe einer Steuereinrichtung 7 gesteuert oder geregelt. Hierbei stellt eine Logik der Steuereinrichtung 7 einen Motorstrom für den Motor 5 bereit.

Die Steuereinrichtung 7 kann darüber hinaus zur Einstellung eines Bahnzuges Z der Warenbahn 1 dienen. Dabei wird der Bahnzug Z mit Hilfe der Steuereinrichtung 7 anhand von Daten, wie zum Beispiel einer auf die Warenbahn 1 wirkenden Reibungs- oder Beschleunigungslast sowie weiterer Größen wie dem Durchmesser der Umlenkrollen 3, 3' und der Breite der Warenbahn 1, bestimmt.

Ferner weist die Steuereinrichtung 7 einen Regelkreis 9 auf. Der Regelkreis 9 dient insbesondere zur Regelung des Drehmoments D, der Drehgeschwindigkeit w und/oder einer Soll-Geschwindigkeit S des Motors 5. Das Drehmoment D, die Drehgeschwindigkeit w und die Soll-Geschwindigkeit S stellen dabei Betriebsparameter BP des Motors 5 dar.

Die Steuereinrichtung 7 dient darüber hinaus zur Einstellung des Bahnzuges Z der Warenbahn 1. Anhand des von der Steuereinrichtung 7 bereitgestellten Bahnzuges Z steuert oder regelt der Regelkreis 9 die Drehgeschwindigkeit w, das Drehmoment D und/oder die Soll-Geschwindigkeit S des Motors 5. Durch den Motor 5 ist der Bahnzug Z der Warenbahn 1 regelbar.

Die Vorrichtung umfasst darüber hinaus ein Bestimmungs- und/oder Klassifizierungsmodul 11 zur Bestimmung und/oder Klassifizierung eines Bahnzustands BZ, insbesondere eines aktuellen Bahnzustands BZa und/oder eines zukünftigen Bahnzustands BZm, der Warenbahn 1 in einer Transporteinrichtung und/oder in einer Bearbeitungsmaschine der Vorrichtung zur Herstellung der Warenbahn 1. Das Bestimmungs- und/oder Klassifizierungsmodul 11 kann Teil der Steuereinrichtung 7 (nicht dargestellt) sein oder auf diese adaptiert sein und Teil einer übergeordneten Steuerung oder einer separaten Steuerung sein, wie es in der Figur 1 dargestellt ist.

Dabei wird während des Betriebs der Vorrichtung Momentanwerte MW mindestens eines der Betriebsparameter BP des Motors 5 erfasst. Als Betriebsparameter BP werden insbesondere Antriebsdaten des Motors 5 erfasst. Beispielsweise werden Momentanwerte MW der Drehgeschwindigkeit w und/oder des Drehmoments D des Motors 5 bestimmt.

Darüber hinaus umfasst das Bestimmungs- und/oder Klassifizierungsmodul 11 ein Lernmodell 13, insbesondere ein Modell zur Beschreibung und Beobachtung des Motors 5 zur Bewegung der Warenbahn 1 durch Antreiben der Umlenkrolle 3, 3'.

Die Momentanwerte MW werden dem Bestimmungs- und/oder Klassifizierungsmodul 11 zugeführt, welches die erfassten Momentanwerte MW des mindestens einen Betriebsparameters BP anhand des Lernmodells 13 analysiert und anhand dieser Analyse einen Bahnzustand BZ der Warenbahn 1 bestimmt und/oder klassifiziert. Unter der Bestimmung und/oder Klassifizierung eines Bahnzustands BZ, wie eines aktuellen Bahnzustands BZa und/oder eines zukünftigen Bahnzustands BZm, wird insbesondere die Bestimmung oder Detektion einer Anomalie der Warenbahn 1 oder eines kritischen Bahnzustands BZ(krit) der Warenbahn 1 bei deren Herstellung oder Bearbeitung wie ein möglicher Bahnabriss R, insbesondere ein aktueller oder sich anbahnender Bahnabriss, verstanden.

Das Lernmodell 13 umfasst hierzu historische Werte HW des mindestens einen Betriebsparameters BP. Beispielsweise sind oder werden als historische Werte HW historische Parameterverläufe HP(t) und/oder historische Änderungsverläufe des Drehmoments D und/oder der Drehgeschwindigkeit w des Motors 5 erfasst, vorverarbeitet und/oder im Lernmodell 13 hinterlegt. Dazu kann eine zugehörige Speichereinheit 14 umfassen. Alternativ oder zusätzlich kann die Steuereinrichtung 7 einen nicht dargestellten Speicher zur Hinterlegung der historischen Werte HW umfassen.

Als historische Parameterverläufe HP(t) sind beispielsweise absolute Vergangenheitswerte des Drehmoments D und/oder der Drehgeschwindigkeit w des Motors 5 mit zugehörigen Zeitstempeln als Funktion der Zeit hinterlegt. Als Änderungsverlauf des Drehmoments D und/oder der Drehgeschwindigkeit w des Motors 5 wird insbesondere eine 1. Ableitung des Drehmoments D und/oder der Drehgeschwindigkeit w des Motors 5 gebildet und hinterlegt.

Das Lernmodell 13 kann als Maschinenlerneinheit ausgebildet sein und verschiedene Lernansätze, wie beispielsweise eines überwachten, eines unbewachten oder eines bestärkenden Lernens, nutzen. Bevorzugt wird der Ansatz eines überwachten Lernens für das Lernmodell 13 genutzt, wobei das Lernmodell 13 anhand der aktuellen Momentanwerte MW und Analysen dieser mit den historischen Werten HW antrainiert oder angelernt und/oder insbesondere hinsichtlich seiner Qualität stufenweise evaluiert wird.

Dabei ist die Bestimmung und/oder Klassifizierung des Bahnzustands BZ, insbesondere eines kritischen Bahnzustands BZ(krit), mittels des Lernmodells 13 in unterschiedlicher Genauigkeit möglich. Dazu kann das Lernmodell 13 verschiedene Verfahren zum maschinellen Lernen oder Kombinationen von einigen dieser verschiedenen Verfahren, wie zum Beispiel Gaussian Naive Bayers, Support Vector Machine und weitere, anwenden.

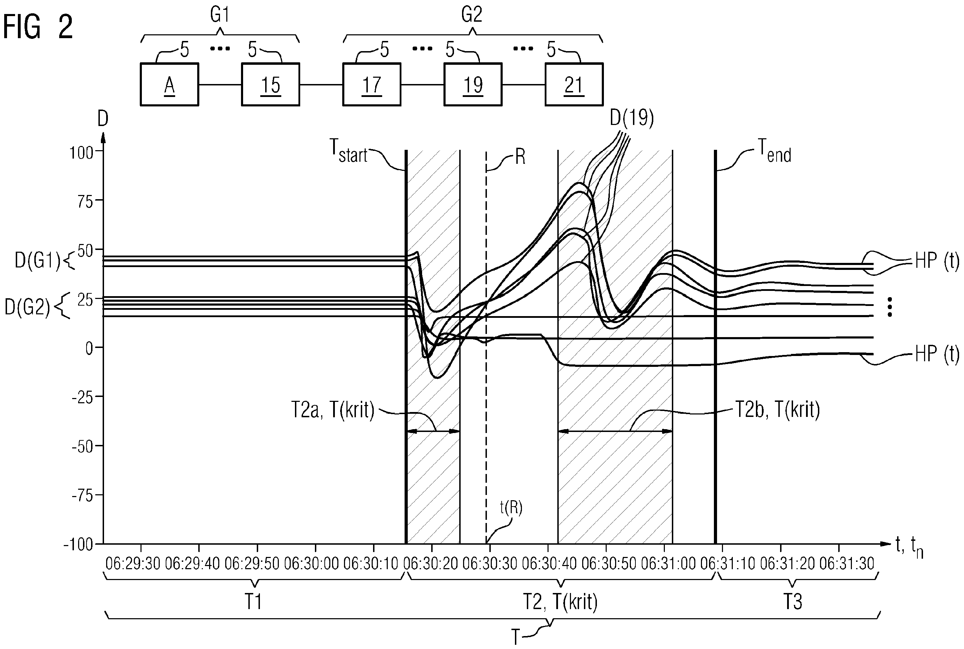

FIG 2 zeigt beispielhaft mehrere historische Parameterverläufe HP(t) des Drehmoments D als jeweiligen Betriebsparameter BP für mehrere ausgewählte Motoren 5, die eine Warenbahn 1 in einer von der in FIG 1 gezeigten verschiedenen Vorrichtung mit einem Mehrmotorenantrieb fördern und transportieren.

Der Mehrmotorenantrieb dieser anderen Vorrichtung umfasst beispielsweise eine Vielzahl von Motoren 5, die in eine erste Gruppe G1 von Motoren 5 von einem Anfang A der Vorrichtung bis kurz zu einer Vortrockenpartie 15 und eine zweite Gruppe G2 von Motoren 5 von einer Filmpresse 17 über eine Nachtrockenpartie 19 bis zu einem Aufroller 21 unterteilt sind.

Dabei werden zum Erzeugen des Lernmodells 13 die historischen Parameterverläufe HP(t) auf Anomalien in ihrem jeweiligen zeitlichen Verlauf mittels des sogenannten maschinellen Lernens durch eine Logik des Bestimmungs- und/oder Klassifizierungsmodul 11 analysiert. Zum Anlernen und Trainieren des Lernmodells 13 werden die historischen Parameterverläufe HP(t) mittels einer explorativen Datenanalyse, das heißt, mittels wiederholter Analysen der Zusammenhänge der aus den historischen Parameterverläufen HP(t) gewonnenen Daten, verarbeitet.

Im gezeigten Beispiel weisen die historischen Parameterverläufe HP(t) in einem ersten Zeitbereich T1 von beispielsweise 06:29:30 (h:min:s) bis 06:30:15 einen normalen Betriebsverlauf mit im Wesentlichen einem jeweils gleichbleibenden Wert des jeweiligen Drehmoments D für die mehreren Motoren 5 und damit keine Anomalien auf. In einem zweiten Zeitbereich T2 von größer 06:30:15 bis 06:31:09 weisen die historischen Parameterverläufe HP(t) des jeweiligen Drehmoments D der ausgewählten Motoren 5 im Vergleich zu dem gleichbleibenden Wert im Normalbetrieb große Änderungen auf, die auf eine Anomalie hinweisen. In einem dritten Zeitbereich T3 von größer 06:31:09 bis 06:31:30 weisen die historischen Parameterverläufe HP(t) des jeweiligen Drehmoments D der ausgewählten Motoren 5 jeweils einen weitgehend gleichbleibenden Wert und damit keine Anomalien auf.

Im zweiten Zeitbereich T2 werden mittels der Datenanalyse zwei Teilzeitbereiche T2a und T2b als kritische Zeitbereiche T(krit) identifiziert, da die Drehmomentwerte große Abweichungen nach unten im Teilzeitbereich T2a bzw. nach oben im Teilzeitbereich T2b gegenüber dem im Wesentlichen gleichbleibenden Normalwert der Drehmomente D in dem ersten und dritten Zeitbereich T1, T3 aufweisen. Diese identifizierten kritischen Teilzeitbereiche T2a, T2b werden im Lernmodell 13 entsprechend markiert und beispielsweise als sogenannte Start- oder Ende-Label hinterlegt.

Zum Erzeugen und Anlernen des Lernmodells 13 werden bevorzugt eine Vielzahl von historischen Parameterverläufen HP(t) einer oder mehrerer Betriebsparameter BP erfasst und mindestens einmal oder wiederholt angelernt.

Beispielsweise werden die Daten der historischen Parameterverläufe HP(t) mittels der Datenanalyse und Datenvorverarbeitung zu Informationen I verarbeitet, die zur Bildung des Lernmodells 13 verwendet werden können und in dem Lernmodell 13 hinterlegt werden, um diese dann bei der Bestimmung und/oder Klassifizierung des Bahnzustands BZ anhand der Momentanwerte MW zu verwenden.

Die Datenanalyse kann insbesondere eine explorative Datenanalyse und Datenvorverarbeitung sein, welche beispielsweise auf einem oder mehreren bekannten Werkzeug/en, zum Beispiel Orange, R, Tableau oder diverser Python-Grafik-Bibliotheken, wie Matplotlib, ggplot, basiert und diese in bekannter Art und Weise anwendet, um einen zukünftigen Bahnzustand BZ der Warenbahn 1 besser einschätzen und prognostizieren zu können.

Beispielsweise werden zum Erzeugen oder Anlernen des Lernmodells 13 für die zu betrachtende Vorrichtung mindestens 50, insbesondere 60 oder mehr, Parameterverläufe HP(t) mit Anomalien und mindestens 50, insbesondere 60 oder mehr, Parameterverläufe HP(t) ohne Anomalien für einen vorgegebenen Betrachtungszeitraum T erfasst und mittels einer Datenanalyse verarbeitet, zum Beispiel miteinander verglichen und/oder mittels einer Grenzwertbetrachtung und/oder einer 1. Ableitung auf starke Änderungen untersucht. Ferner können Methoden der deskriptiven Statistik zur Analyse eingesetzt werden.

Zum Trainieren und Validieren von Algorithmen des Lernmodells 13 werden beispielsweise historische Parameterverläufe HP(t) als Zeitreihendaten für einen Betrachtungszeitraum T von April 2018 bis Juni 2019 ermittelt und berücksichtigt. Für eine Anomaliedetektion werden beispielsweise zwei Klassen definiert und unterschieden in "normal" (= "0", normaler (betriebsgemäßer) Bahnzustand) und "anormal" (= "1", kritischer Bahnzustand, insbesondere Anomalien der Betriebsparameter P der Motoren 5 und/oder Bahnabriss).

Zum Training werden für eine zuverlässige Klassifizierung für beide Klassen in etwa gleich viele historische Parameterverläufe HP(t) mit normalen Bahnzuständen BZ und mit anomalen, kritischen Bahnzuständen BZ(krit) beispielsweise aus einer Datenbank ermittelt, analysiert, aufbereitet und dem Lernmodell 13 zur Verfügung gestellt und zum Training verwendet. Dadurch wird die gesamte Historie durch repräsentative Sequenzen in komprimierter Länge von aus der Datenanalyse der historischen Parameterverläufe HP(t) gewonnenen Informationen I dargestellt.

Darüber hinaus werden beispielsweise der erste Zeitbereich T1 und der dritte Zeitbereich T3 aufgrund ihrer zugehörigen historischen Parameterverläufe HP(t) mit weitgehend gleichbleibenden Werten als Zeitbereiche mit einem normalen Betriebsverlauf der Motoren 5 identifiziert und entsprechende Informationen I im Lernmodell 13 berücksichtigt und beispielsweise markiert und hinterlegt. Der zweite Zeitbereich T2, in welchem starke Änderungen in Form einer Schwingung des Drehmoments D identifiziert werden, wird als ein kritischer Zeitbereich T(krit) identifiziert und entsprechende Informationen I werden im Lernmodell 13 berücksichtigt und gegebenenfalls hinterlegt.

Zusätzlich zu den historischen Parameterverläufen HP(t) werden als Markierungen oder Labels Daten zu identifizierten tatsächlichen Bahnabrissen R und/oder Stillständen der zu betrachtenden Vorrichtung im Betrachtungszeitraum T ermittelt und im Lernmodell 13 verwendet und beispielsweise hinterlegt..

Die Markierungen oder Labels des Lernmodells 13 können beispielsweise Daten über den identifizierten tatsächlichen Bahnabriss R und/oder den identifizierten tatsächlichen Stillstand sowie zusätzlich einen zugehörigen Zeitpunkt t(r) des jeweiligen Bahnabrisses R bzw. des jeweiligen Stillstandes und gegebenenfalls eine zugehörigen Zeitdauer umfassen. Darüber hinaus können Markierungen und/oder Labels des Lernmodells 13 weitere Daten oder Auswertungen beinhalten, wie beispielsweise eine Beschreibung des tatsächlichen Bahnabrisses R, insbesondere eine Beschreibung über eine Lokalisierung, wo der Bahnabriss R an der Warenbahn 1 auftrat, wie der Bahnabriss R verläuft, beispielsweise ob ein Bahnabriss R über die Breite der Warenbahn 1 oder ein Bahnanriss R über die Länge der Warenbahn 1 verläuft und/oder einen Grund für den Bahnabriss R oder den Stillstand der Vorrichtung, zum Beispiel ob der Bahnabriss R bzw. der Stillstand aufgrund einer Störung eines der Motoren 5 ausgelöst wurde, und/oder eine Dauer des jeweiligen Stillstandes beinhalten.

Dabei können im Lernmodell 13 die mittels der Datenanalyse ermittelten Informationen I über die im Betrachtungszeitraum T identifizierten tatsächlichen Bahnabrisse R und/oder identifizierten tatsächlichen Stillstände mit Hilfe eines Bahnabriss- und/oder Stillstandsberichts angelernt werden, wobei der Stillstandsbericht auch zusätzliche Maschinenstillstände umfassen kann, die nicht auf einen tatsächlichen Bahnabriss R zurückgehen und/oder von einem solchen verursacht sind.

In den gezeigten historischen Parameterverläufen HP(t) wird im Betrachtungszeitraum T ein tatsächlicher Bahnabriss R zu einem Zeitpunkt t(r) identifiziert, der in dem zweiten Zeitbereich T2 liegt, in welchem die starken Änderungen der Drehmomente D der Motoren 5 auftreten. Die historischen Parameterverläufe HP(t) sind analog unterteilt in Drehmomentverläufe D(G1) der ersten Gruppe G1 von Motoren 5 und Drehmomentverläufe D(G2) der zweiten Gruppe G2 von Motoren 5.

Im Detail laufen dabei zu Beginn des Bahnrisses R die Drehmomente D derjenigen Motoren 5 entgegengesetzt, zwischen denen die Warenbahn 1 reißt. Dadurch kann in diesem Beispiel als Lokalisierung des Bahnrisses R ein Ort zwischen einer Nachtrockengruppe 19 und vor dem Aufroller 21 bestimmt werden. Dabei tritt bei den historischen Drehmomentverläufen D(G1) der ersten Gruppe G1, zum Beispiel der Motoren 5 der Nachtrockengruppe 19, jeweils ein ähnliches Schwingungsverhalten auf. Hingegen bei dem Drehmomentverläufen D(G2) der zweiten Gruppe G2, zum Beispiel der Motoren 5 des Aufrollers 21, ein Sprungverhalten auf.

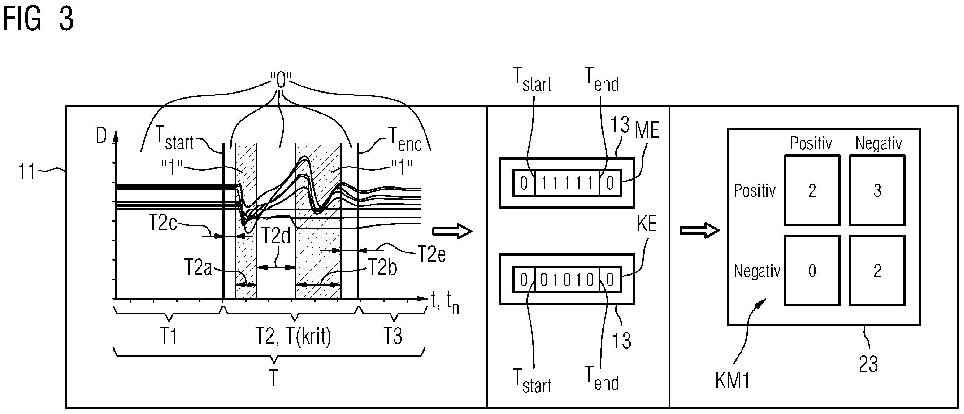

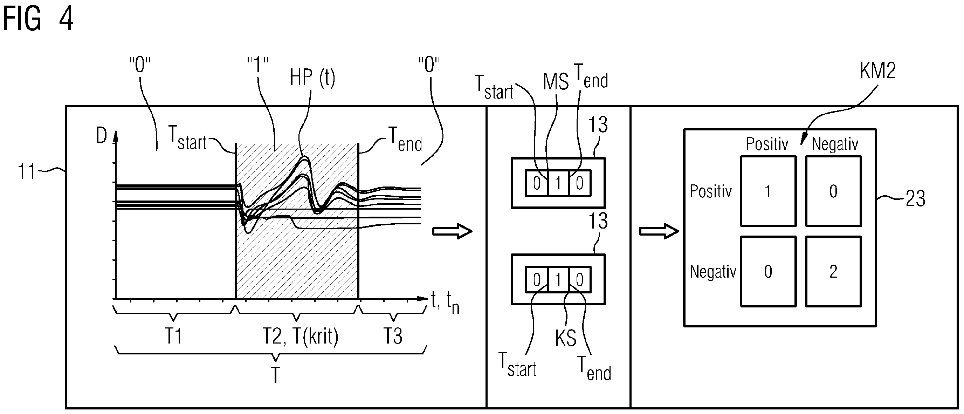

Dieser zweite Zeitbereich T2 mit den als kritisch identifizierten Teilzeitbereichen T2a, T2b kann dabei über den gesamten zweiten Zeitbereich T2 (Beispiel nach FIG 4) und/oder über die Teilzeitbereiche T2a, T2b (Beispiel nach FIG 3) als kritischer Zeitbereich T(krit) identifiziert und durch das Ergebnis des Lernmodells 13 entsprechend detektiert werden.

Alternativ oder zusätzlich zur Verwendung der Drehmomente D der Motoren 5 können deren Drehgeschwindigkeiten w und/oder eine Bahngeschwindigkeit der Warenbahn 1 analysiert und zu weiteren Informationen I für das Lernmodell 13 verarbeitet werden. Beispielsweise weisen die Motoren 5 des Aufrollers 21 nach dem Bahnabriss R eine reduzierte Drehgeschwindigkeit w auf. Mit anderen Worten: Die Drehgeschwindigkeiten w der Motoren 5 des Aufrollers 21 werden nach dem Bahnabriss R mittels des Regelkreises 9 rampenförmig nach unten gefahren.

Zusammenfassend werden die Daten der historischen Parameterverläufe HP(t) mittels einer Datenanalyse, insbesondere einer explorativen Datenanalyse und der deskriptiven Statistik, aufbereitet und zu Informationen I verarbeitet, um das Lernmodell 13 zu modellieren oder zu bilden und dieses anzulernen.

Für die Modellierung des Lernmodells 13 werden die Daten der historischen Parameterverläufe HP(t) und/oder die daraus gewonnenen Informationen I für eine weitere Verarbeitung exportiert und/oder transformiert.

Dabei können über die Zeitwerte tn des kritischen Zeitbereichs T(krit) des tatsächlichen Bahnabrisses R einzelne Sequenzen des Bahnabrisses R zeitlich determiniert werden. Insbesondere können Zeitabschnitte und/oder Zeitpunkte festgelegt und für das Lernmodell 13 aufbereitet, insbesondere markiert, werden.

Beispielsweise können anhand der historischen Parameterverläufe HP(t) ein Startzeitpunkt Tₛₜₐᵣₜ und eine Endzeitpunkt T_{end} für identifizierte Anomalien in den Teilzeitbereichen T2a, T2b und damit für den kritischen Zeitbereich T(krit) bestimmt und als Informationen I im Lernmodell 13 verwendet werden. Der hinterlegte Startzeitpunkt Tstart und der hinterlegte Endzeitpunkt T_{end} können dann im Lernmodell 13 zur Markierung der Momentanwerte MW in Bezug auf Anomalien durch einen Bahnabriss R und damit zur modellbasierten Bestimmung eines Bahnzustands BZ, insbesondere eines aktuellen oder zukünftigen Bahnzustands BZa bzw. BZm und/oder eines kritischen Bahnzustands BZ(krit), verwendet werden.

Auch können identifizierte Ereignisse, wie ein tatsächlicher Bahnabriss R als ein tatsächlicher kritischer Bahnzustand BZ(krit) oder ein anderer identifizierter Bahnzustand BZ, im Lernmodell 13 klassifiziert werden.

Für eine Klassifizierung werden aus den historischen Parameterverläufen HP(t) Zeitbereiche mit normalen Betriebsverhalten oder normalen Sequenzen des Drehmoments D, wie der erste und der dritte Zeitbereich T1, T3 und kritische Zeitbereiche T(krit), T2, T2a, T2b mit anomalen Betriebsverhalten und somit mit Anomalien, wie Bahnabrissen R, identifiziert und entsprechend markiert sowie unterschiedlich klassifiziert.

Beispielsweise werden zur Modellierung und/oder Anlernen des Lernmodells 13 Zeitstempel oder Zeitwerte des jeweiligen Startzeitpunkts Tₛₜₐᵣₜ und des jeweiligen Endzeitpunkts T_{end} eines jeden identifizierten tatsächlichen Bahnabrisses R erfasst und beispielsweise in Tabellenform für das Lernmodell 13 gespeichert, wobei normale Sequenzen ähnlicher Länge aus einem Zeitraum zwischen zwei identifizierten tatsächlichen Bahnabrissen R ausgesucht und dem Lernmodell 13 zugeführt werden. Dadurch hat man monatsweise so viele normale Sequenzen wie Bahnrisssequenzen. Diese Sequenzen können des Weiteren in einem Skript mit einzelnen Zeitwerten tₙ konvertiert und optional um eine Zeitverschiebung zur Coordinated Universal Time (UTC) angepasst werden. Ein weiteres Skript erlaubt eine mögliche Verlängerung oder Verkürzung der Sequenzen in Abhängigkeit von der jeweiligen Aufgabenstellung. Sollten im aktuellen Zeitabschnitt keine Momentanwerte MW oder Daten in der Datenbank bzw. -historie vorhanden sein, wird über eine Abfrage der fehlende letzte und/oder erste Wert außerhalb des Zeitbereichs gesucht und angehängt.

Darüber hinaus können die Zeitwerte tₙ und die zugehörigen Daten der historischen Parameterverläufe HP(t) linear auf volle Sekunden interpoliert und für das Lernmodell 13 aufbereitet werden. Dadurch können die historischen Parameterverläufe HP(t) auf eine synchronisierte Frequenz transformiert werden, so dass alle Zeitreihen in einem Datenrahmen als Spaltenvektoren zusammengeführt werden können.

Im letzten Schritt werden die jeweiligen identifizierten Zeitbereiche T1 bis T3 markiert. Alle normalen Zeitbereiche T1 und T3, deren Parameterverläufe HP(t) einen Normalverlauf des Drehmoments D beschreiben, werden mit dem Wert "Null" markiert. Die Zeitbereiche T2, T2a, T2b, die einen kritischen Zeitbereich T(krit) mit einem Bahnabriss R beinhalten und deren zugehöriger Verlauf des Drehmoments D Anomalien, zum Beispiel ein Schwingungsverhalten, aufweist, werden mit dem Wert "Eins" markiert und dem Lernmodell 13 zugeführt.

Zur Modellierung des Lernmodells 13 werden alle Sequenzen oder historischen Parameterverläufe HP(t) aller Motoren 5 entsprechend aufbereitet. Bei Bedarf können die historischen Parameterverläufe HP(t) randomisiert durchgetauscht werden, sodass hierbei kein Muster entstehen kann. Dabei reicht allein das Randomisieren der Liste an Schlüsselwerten des Dictionaries, die dann verwendet wird, um die einzelnen historischen Parameterverläufe HP(t) in dieser randomisierten Reihenfolge dem Algorithmus für das Training des Lernmodells 13 zuzuführen.

Zusammenfassend können zur Modellierung und zum Trainieren des Lernmodells 13 verschiedene Ansätze, insbesondere Anomalieerkennung in den historischen Parameterverläufen HP(t) gewählt und angewendet werden.

Das Verfahren zur Bestimmung und/oder Klassifizierung eines aktuellen Bahnzustands BZa und/oder eines zukünftigen Bahnzustands BZm der Warenbahn 1 verwendet dabei das erzeugte Lernmodell 13, wobei erfasste Momentanwerte MW eines Betriebsparameters BP, wie des Drehmoments D, des oder der Motoren 5 anhand des Lernmodells 13 analysiert und anhand dieser Analyse ein aktueller Bahnzustand BZa und/oder ein zukünftiger Bahnzustand BZm, insbesondere ein aktueller kritischer oder ein zukünftiger kritischer Bahnzustand BZ(krit), der Warenbahn 1 bestimmt und/oder klassifiziert wird.

Das Bestimmungs- und/oder Klassifizierungsverfahren arbeitet sensorlos und unterliegt damit keinem mechanischen Verschleiß. Das Verfahren verwendet dabei bereits vorhandene Daten, nämlich Betriebsparameter BP des Antriebs, wie die Drehgeschwindigkeit w und/oder das Drehmoment D des Motors 5. Diese Betriebsparameter BP stehen bereits in der Vorrichtung bereit und werden üblicherweise von dem Regelkreis 9 für eine Antriebsregelung benutzt. Somit entfallen zusätzliche Datenerfassungen und Sensoren. Dabei wird bevorzugt als Bahnzustand BZ anhand von ermittelten Anomalien der Betriebsparameter BP des oder der Motoren 5 beispielsweise ein momentaner Bahnabriss R oder ein sich anbahnender oder zukünftiger Bahnabriss R frühzeitig noch vor einem Auftreten identifiziert. Somit können Stillstandszeiten und ein möglicher Produktionsausfall durch eine solche frühe Bestimmung eines sich anbahnenden oder möglichen zukünftigen Bahnabrisses R vermieden werden.

Durch die Verwendung und Verarbeitung von Antriebsdaten des Motors 5 (wie Drehzahl, Drehmoment D, Drehgeschwindigkeit w) können mittels des Lernmodells 13 unterschiedliche Betriebssituationen und/oder Motorzustände des Motors 5 im Hinblick auf einen möglichen Bahnabriss R als kritischen Bahnzustand BZ(krit) oder einen normalen Bahnzustand BZ der Warenbahn 1 bestimmt und klassifiziert werden.

FIG 3 und 4 zeigen ein Bespiel zum Validieren des Lernmodells 13 mittels einer elementweisen Klassifikation KE einzelner Zeitpunkte tₙ bzw. einer sequenzweisen Klassifikation KS von Zeitbereichen T1 bis T3 anhand von historischen Parameterverläufen HP(t) und entsprechender elementweiser bzw. sequenzweiser Markierung ME bzw. MS dieser im Lernmodell 13.

Der einfachhalber zeigen die beiden Diagramme in Figuren 3 und 4 in etwa die gleichen historischen Parameterverläufe HP(t) wie Figur 2.

Figur 3 zeigt neben dem Diagramm der historischen Parameterverläufe HP(t) der Drehmomente D eine elementeweise Klassifikation KE für jeden Zeitwert und/oder für ausgewählte Zeitpunkte tₙ im Betrachtungszeitraum T.

Alle normalen Zeitbereiche T1 und T3, deren historischen Parameterverläufe HP(t) anhand der Datenanalyse einen Normalverlauf des Drehmoments D aufweisen und beschreiben, werden in der zugehörigen elementweisen Klassifikation KE zu einem Wert mit "Null" vor dem Startzeitpunkt Tₛₜₐᵣₜ und nach dem Endzeitpunkt T_{end} klassifiziert.

Beim Anlernen des Lernmodells 13 werden aufgrund der Lage der Teilzeitbereiche T2c, T2d und T2e zwischen dem Startzeitpunkt Tₛₜₐᵣₜ und dem Endzeitpunkt T_{end} diese Teilzeitbereiche T2c, T2d und T2e alle als kritisch im Lernmodell 13 markiert. Damit ergibt sich über den gesamten Betrachtungszeitraum T eine elementweise Markierung ME mit den folgenden Werten:
ME = 0 1 1 1 1 1 0.

Zum Validieren des Lernmodells 13 werden diesem erneut Drehmomentdaten in Form der historischen Parameterverläufe HP(t) zugeführt. Dabei ermittelt das antrainierte Lernmodell 13 für den zweiten Zeitbereich T2 zwischen dem Startzeitpunkt Tₛₜₐᵣₜ und dem Endzeitpunkt T_{end} die Teilzeitbereiche T2a, T2b aufgrund der starken Änderungen der Drehmomentwerte als kritische Zeitbereiche T(krit) und klassifiziert diese Teilzeitbereiche T2a, T2b in der zugehörigen elementweisen Klassifikation KE mit "1". Darüber hinaus identifiziert das antrainierte Lernmodell 13 im zweiten Zeitbereich T2 drei weitere Teilzeitbereiche T2c, T2d und T2e, deren zugehöriger Verlauf des Drehmoments D zwar Anomalien, aber zu geringe Anomalien aufweist, um als kritisch bewertet zu werden. Diese weiteren Teilzeitbereiche T2c, T2d und T2e werden als unkritisch identifiziert und in der zugehörigen elementweisen Klassifikation KE mit "0" klassifiziert. Damit ergibt sich als Ergebnis des antrainierten Lernmodells 13 über den gesamten Betrachtungszeitraum T eine elementweise Klassifikation KE mit den folgenden Werten:
KE = 0 0 1 0 1 0 0.

Dabei werden die ermittelten Klassifikationswerte in eine erste Klassifikationsmatrix KM1 für das Lernmodell 13 transformiert, wobei in den Zeilen der ersten Klassifikationsmatrix KM1 tatsächlich gemessene Daten, wie tatsächlich gemessene Bahnabrisse R, und in den Spalten mittels des Lernmodells 13 ermittelte Daten, wie mittels des Lernmodells 13 ermittelte kritische Bahnzustände BZn und/oder aus ermittelten Bahnzuständen BZ abgeleitete Bahnabrisse R, abgebildet werden.

FIG 4 zeigt die sequenzweise Klassifikation KS der Zeitbereiche T1 bis T3 der historischen Parameterverläufe HP(t). Dabei werden die ermittelten Klassifikationswerte in eine zweite Klassifikationsmatrix KM2 transformiert, wobei in den Zeilen der zweiten Klassifikationsmatrix KM2 tatsächlich gemessene Daten, wie tatsächlich gemessene Bahnabrisse R, und in den Spalten mittels des Lernmodells 13 ermittelte Daten, wie mittels des Lernmodells 13 ermittelte kritische Bahnzustände BZn und/oder aus ermittelten Bahnzuständen BZ abgeleitete Bahnabrisse, abgebildet werden.

Auch hier werden alle normalen Zeitbereiche T1 und T3, deren historischen Parameterverläufe HP(t) anhand der Datenanalyse in den zugehörigen Sequenzen dieser Zeitbereiche T1 bzw. T3 einen Normalverlauf des Drehmoments D aufweisen und beschreiben, in der zugehörigen sequenzweisen Klassifikation KS zu einem Wert mit "Null" vor dem Startzeitpunkt Tₛₜₐᵣₜ und nach dem Endzeitpunkt T_{end} zusammengefasst und klassifiziert.

Für den zweiten Zeitbereich T2 zwischen dem Startzeitpunkt Tₛₜₐᵣₜ und dem Endzeitpunkt T_{end} wird mittels des Lernmodells 13 anhand der Datenanalyse der historischen Parameterverläufe HP(t) in dieser Sequenz des zweiten Zeitbereiches T2 aufgrund der ermittelten starken Änderungen der Drehmomentwerte in diesem zweiten Zeitbereich T2 der gesamte zweite Zeitbereich T2 als kritischer Zeitbereich T(krit) ermittelt und in der sequenzweisen Klassifikation KS entsprechend mit "1" klassifiziert. Damit ergibt sich als Ergebnis des Lernmodells 13 über den gesamten Betrachtungszeitraum T eine sequenzweise Klassifikation KS mit den folgenden Werten:
KS = 0 1 0.

Beim Anlernen des Lernmodells 13 werden alle identifizierten Sequenzen entsprechend sequenzweise markiert. Dabei ergibt sich über den gesamten Betrachtungszeitraum T eine sequenzweise Markierung MS mit den folgenden Werten:
MS = 0 1 0.

Dabei kann die elementweise Klassifikation KE auf eine sequenzweise Klassifikation KS durch Selektion des Maximums der Bestimmung zwischen Startzeitpunkt Tₛₜₐᵣₜ und Endzeitpunkt T_{end} des kritischen Zeitbereichs T(krit) transformiert werden, beispielsweise zur Konzentration von True Positives-Klassifizierungen (Tatsächlich Positiv - Prognose Positiv) und Unterdrückung der nicht relevanten False Negatives-Klassifizierungen (Tatsächlich Positiv - Prognose Negativ).

Die Identifizierung des Bahnzustands BZ, wie eines aktuellen Bahnzustands BZ und/oder eines zukünftigen Bahnzustandes BZm, insbesondere eines möglichen zukünftigen Bahnabrisses R, ist mittels des Lernmodells 13 in unterschiedlicher Genauigkeit möglich. Als Verfahren zum maschinellen Lernen wendet das Lernmodell 13 beispielsweise ein oder mehrere der nachfolgenden Verfahren in Kombination an: Gaussian Naive Bayes, Logistic Regression, Support Vector Machine, Principal Component Analysis mit anschließender Klassifikation, k-means clustering, k-nearest neighbor, Decision Tree, Random Forest, Neural Network (Klassifikation), Neural Network (Regression mit anschließender Klassifikation), Autoencoder, Gated Recurrent Unit, Long Short-Term Memory und weitere. Durch die Kombination einiger dieser Verfahren als Grundlage für das Lernmodell 13 lassen sich Genauigkeit, Langzeitstabilität und Reaktionszeit der Bestimmung des Bahnzustands BZ, insbesondere eines aktuellen Bahnzustands BZa und/oder eines zukünftigen Bahnzustandes BZm, weiter optimieren.

Zur Validierung des Lernmodells 13, insbesondere zur Validierung der Prognose des Lernmodells 13 von Anomalien, wie zukünftigen kritischen Bahnzuständen BZ(krit) können mehrere Qualitätskriterien ermittelt und berücksichtigt werden:
In einer ersten Evaluierung des Lernmodells 13 wird ein Genauigkeitswert 23 für das Lernmodell 13 bestimmt. Ziel ist es, die einzelnen Werte der historischen Parameterverläufe HP(t) möglichst akkurat zu klassifizieren und hierbei Fehler, wie False Positives oder False Negatives-Klassifizierungen zu minimieren. Beispielsweise werden für einen vorgegebenen Betrachtungszeitraum T (= historischer Zeitbereich, der in der Vergangenheit liegt) die für diesen Betrachtungszeitraum T mittels des Lernmodells 13 bestimmten Bahnzustände BZ mit den in diesem Zeitbereich tatsächlich identifizierten Bahnzuständen BZ(ist) (nicht dargestellt) verglichen und aus diesem Vergleich den Genauigkeitswert 23 für das Lernmodell 13 anhand der zweiten Klassifikationsmatrix KM2 bestimmt wird.

Die Prozesse der Vorrichtung, insbesondere einer Papiermaschine, laufen beispielsweise in einer hohen Geschwindigkeit von zum Beispiel circa 1200 m/min im Vergleich zu anderen Produktionsprozessen ab; diese Prozesse sind jedoch in ihrer Regelung und Dynamik sehr träge, da das Ziel einer konstanten Produktion keine hohe dynamischen Eigenschaften erfordert.

Aus diesem Grund zieht sich das Hoch- bzw. Herunterfahren der Papiermaschine über bis zu zwei Minuten hinweg. Würde im Rahmen einer False Positives-Klassifizierung eine Anomalie detektiert werden, wo tatsächlich keine Anomalie gegeben ist, würde die Papiermaschine dennoch heruntergefahren werden. Dies würde zu einem unnötigen Produktionsausfall und somit zu einem einen unnötigen und höheren wirtschaftlichen Schaden führen.

Aus diesem Grund werden mittels des Genauigkeitswerts 23, der im Lernmodell 13 als ein Algorithmus implementiert ist, False Positives-Klassifizierungen stets unterbunden, wohingegen False Negatives-Klassifizierungen keine kritische Größe sind, sobald ein Bahnabriss R, der sich über 10 bis 30 Sekunden hinzieht, zu nur einem Zeitpunkt t(r) erkannt wird. Einzelne unkritische False Positives-Klassifizierungen der Zeitpunkte t(x) werden durch die Art und Weise der sequenzweisen Klassifikation in der zweiten Transformationsmatrix TM2 des Genauigkeitswerts 23 ausgeblendet.

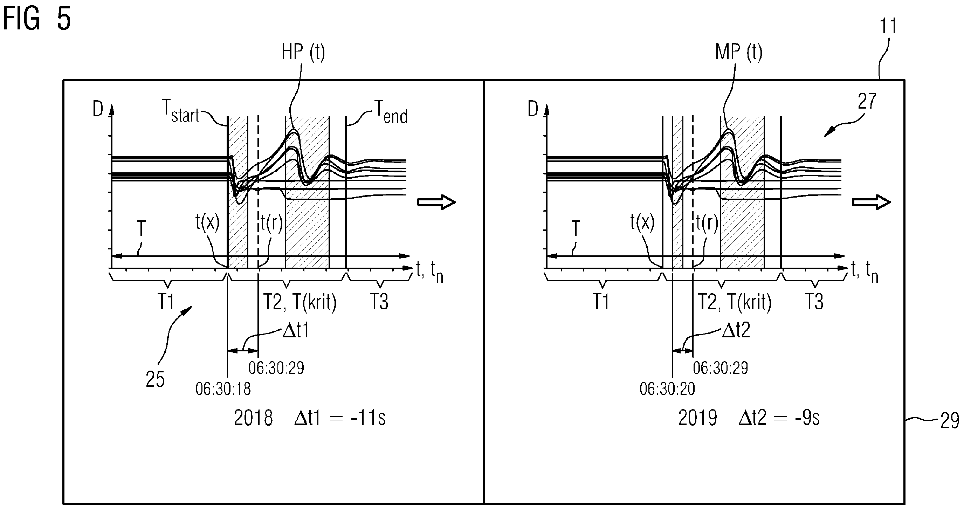

FIG 5 zeigt ein Bespiel zum Trainieren und Validieren des Lernmodells 13 mittels einer Reaktionszeitevaluierung 25 und einer Langzeitstabilitätsevaluierung 27.

Dabei wird für eine weitere Evaluierung des Lernmodells 13, zum Beispiel für eine zweite Evaluierungsstufe mittels der Reaktionszeitevaluierung 25, eine erste Zeitdifferenz Δt1 zwischen einem prognostizierten Zeitpunkt t(x) der Bestimmung des kritischen Bahnzustandes BZ(krit) mittels des Lernmodells 13 und dem Zeitpunkt t(r) einer wegen eines tatsächlichen kritischen Bahnzustandes BZ(krit) erfolgten Deaktivierung der Vorrichtung, zum Beispiel einer Deaktivierung des Regelkreises 9 bestimmt, wobei anhand dieser Zeitdifferenz Δt ein Reaktionszeitklassifikator 29 bestimmt wird.

Beispielsweise wird der prognostizierte Zeitpunkt t(x) des Erkennens des künftigen kritischen Bahnzustands BZ(krit) mit dem Zeitpunkt t(r) der Deaktivierung beispielsweise einer Zugregelung zu einer aktivierten Drehzahlregelung des Regelkreises 9 des Aufrollers 21 verglichen. Dies bedeutet, dass der zugehörige Motor 5 die Drehzahl am Aufroller 21 nicht mehr nach dem Zug der Papierbahn regelt, da zum aktuellen Zeitpunkt die Walzen keine Papierbahn mehr führen. Die Zugregelung wird durch eine folgende Logik deaktiviert. Unterschreitet der Zug-Istwert über eine Istwert-Glättung von einer Sekunde hinweg den Schwellwert eines Zehntels des Zug-Nominalwerts (10 Prozent von 1500 N/m) und tut dies für weitere fünf Sekunden, so wird davon ausgegangen, dass kein normaler Papierherstellungsprozess mehr abläuft und die Zugregelung damit deaktiviert wird. Aus dieser Logik kann geschlossen werden, dass ein Bahnabriss R ungefähr sechs Sekunden vor der Deaktivierung der Zugregelung durch die Zugmessdose (= Messinstrument zur Messung des Zug-Istwerts) am Aufroller 21 mit einer relativ hohen Sicherheit erkannt werden kann.

Findet ein Bahnabriss R in einer der Gruppen oder Komponenten vor dem Aufroller 21 statt, muss das Ende des gerissenen Papiers erst den Weg zum Aufroller 21 durchlaufen, bevor es durch die Zugmessdose detektiert wird. Somit sollten Bahnabrisse R mindestens sechs Sekunden vor der Deaktivierung der Zugregelung vom Lernmodell 13 mittels des Bestimmungs- und/oder Klassifizierungsmoduls 11 erkannt werden.

Darüber hinaus werden für eine weitere Evaluierung des Lernmodells 13, zum Beispiel für eine dritte Evaluierungsstufe mittels der Langzeitstabilitätsevaluierung 27, historische Ergebnisse des Reaktionszeitklassifikators 29 oder des Genauigkeitswertes 23, beispielsweise aus dem Jahr 2018 mit momentanen Ergebnissen des Reaktionszeitklassifikators 29 oder des Genauigkeitswertes 23 beispielsweise aus dem Jahr 2019 verglichen, wie in FIG 5 dargestellt.

Das linke Diagramm zeigt historische Parameterverläufe HP(t), anhand welcher die erste Zeitdifferenz Δt1 ermittelt wird. Das rechte Diagramm zeigt momentane Parameterverläufe MP(t), anhand welcher eine zugehörige zweite Zeitdifferenz Δt2 zwischen dem Zeitpunkt t(r) des tatsächlichen Bahnabrisses R und dem ermittelten Zeitpunkt t(x) des modellbasiert bestimmten kritischen Bahnzustands BZ(krit) ermittelt wird.

Ein Vergleich der ersten Zeitdifferenz Δt1 und der zweiten Zeitdifferenz Δt2 zeigt, dass der Wert der Reaktionszeit sinkt. Mittels der Langzeitstabilitätsevaluierung 27 wird der Vergleich bewertet und zur Evaluierung der Genauigkeit und Stabilität des Lernmodells 13 herangezogen. Unterschreitet die zweite Zeitdifferenz Δt2 einen vorgegebenen Schwellwert, so wird anhand der Langzeitstabilitätsevaluierung 27 das Lernmodell 13 als ungenau bewertet und ein neues Trainieren des Lernmodells 13 vorgenommen oder jenes deaktiviert.

An vielen Anlagen im Betrieb werden regelmäßig Komponenten gewartet und bei Bedarf ausgetauscht. Zum Beispiel werden die Walzen oder Umlenkrollen 3, 3', die das Papier führen, gewechselt, was zu unterschiedlichen Durchmessern der Walzen führen kann. Auch weitere Komponenten und Konfigurationen können das Verhalten der Drehmomente D und Drehgeschwindigkeiten w sowie das Verhalten bei anormalen Situationen beeinflussen. Aus diesem Grund wird mittels der Langzeitstabilitätsevaluierung 27 ein Vergleich der Genauigkeit von Daten, insbesondere von Monatsdaten und/oder Jahresdaten vorgenommen, zum Beispiel ein Vergleich von Daten aus Juni 2018 und Juni 2019.

Vorzugsweise ist ein Computerprogrammprodukt vorgesehen, das dazu ausgebildet ist, das Verfahren auf der Steuereinrichtung 7 und/oder auf einem, der Steuereinrichtung 7 zugeordneten Recheneinheit auszuführen. Mit Hilfe des Computerprogrammprodukts wird die Herstellung der Warenbahn 1 unterstützt oder ausgeführt. Die Steuereinrichtung 7 steuert oder regelt die Herstellung der Warenbahn 1 in Abhängigkeit von dem mittels des zuvor beschriebenen Verfahrens bestimmten Bahnzustands BZ.

Beispielsweise wird anhand zeitlich nacheinander erfasster Momentanwerte MW des mindestens einen Betriebsparameters BP, wie des Drehmoments D eines Motors 5, ein zeitlicher Momentanwertverlauf dieses Betriebsparameters BP bestimmt und dem Lernmodell 13 aufbereitet zugeführt und anhand dieses Verlaufsvergleichs der Bahnzustand BZ, insbesondere ein aktueller Bahnzustand BZa oder ein zukünftiger Bahnzustand BZm, mittels des Bestimmungs- und/oder Klassifizierungsmoduls 11 ermittelt und als Momentanwerte MW des Betriebsparameters BP werden beispielsweise das Drehmoment D eines der Motoren 5 und/oder die Drehgeschwindigkeit w eines der Motoren 5 erfasst und in der einfachsten Ausprägung des Lernmodells 13 mit einem Grenzwert verglichen, wobei beispielsweise bei Überschreitung eines oberen Grenzwertes für das Drehmoment D auf eine Rissbildung geschlossen wird.

Darüber hinaus kann das Lernmodell 13 anhand von historischen Parameterverläufen HP(t) die Motoren 5 im Hinblick auf ihre Relevanz für den zu ermittelnden Bahnzustand BZ klassifizieren und/oder selektieren. Insbesondere kann für den jeweiligen Motor 5 ein Klassifikationswert im Lernmodell 13 hinterlegt werden.

Beispielsweise werden anhand der historischen Parameterverläufe HP(t) diejenigen Motoren 5 identifiziert, anhand derer Parameterverläufe HP(t) ein kritischer Bahnzustand BZ(krit) sicher und schnell bestimmt werden kann. Alternativ können solche Motoren 5 manuell durch Analysen ausgewählt werden. Solche Motoren 5 sind insbesondere die Antriebsmotoren der Umlenkrollen 3, 3' oder Aufroller 21. Diese werden als hoch relevant oder relevant klassifiziert und bei der Bestimmung des Bahnzustandes BZ berücksichtigt und entsprechend bedarfsweise selektiert. Hingegen werden Motoren 5, welche Hilfsantriebe für eine Pumpe oder andere Einrichtungen sind, als weniger oder nicht relevant klassifiziert und bei der Bestimmung des Bahnzustands BZ nicht berücksichtigt und damit nicht selektiert.

Des Weiteren können ein erster Momentanwertverlauf des Betriebsparameters BP eines ersten Motors 5 und ein zweiter Momentanwertverlauf eines gleichen Betriebsparameters BP eines dem ersten Motor 5 benachbarten zweiten Motors 5 erfasst werden sowie Änderungen zwischen dem ersten Momentanwertverlauf und dem zweiten Momentanwertverlauf ermittelt werden und anhand der ermittelten Änderung der Bahnzustand BZ der Warenbahn 1 mittels des Bestimmungs- und/oder Klassifizierungsmoduls 11 bestimmt und/oder klassifiziert werden. Beispielsweise kommt es zu einer zu großen Änderung zwischen dem ersten Momentanwertverlauf des ersten Motors 5 und dem zweiten Momentanwertverlauf des zweiten Motors 5, so wird bei Überschreitung eines Grenzwertes für die ermittelten Änderungen auf einen sich anbahnenden oder möglichen zukünftigen Bahnabriss R geschlossen und ein solcher bestimmt. Eine solche große Änderung bedeutet, dass der Motor 5 die Drehzahl an einem Aufroller 21 für die Warenbahn 1 nicht mehr nach dem Zug der Warenbahn 1 regelt, da zum aktuellen Zeitpunkt die Umlenkrolle 3, 3' oder Walze keine Warenbahn 1 mehr führt. Eine übliche Zugregelung wird dabei durch die zugehörige Regelungslogik deaktiviert, wenn beispielsweise ein Zug-Istwert über eine Istwert-Glättung von einer Sekunde hinweg den Grenz- oder Schwellwert eines Zehntels eines Zug-Nominalwerts (10 Prozent von beispielsweise 1.500 N/m) unterschreitet und dies für weitere fünf Sekunden tut, da nach Ablauf von in Summe sechs Sekunden davon ausgegangen wird, dass kein normaler Herstellungsprozess mehr abläuft und demzufolge die Zugregelung automatisch nach sechs Sekunden deaktiviert wird. Da das Lernmodell 13 bereits nach Erkennung der Abweichung oder Änderung einen kritischen Bahnzustand BZ(krit) bestimmt, erfolgt die Erkennung des kritischen Bahnzustands BZ(krit) beispielsweise im Mittel vier Sekunden vor der Erkennung der bisherigen Logik und mindestens 10 Sekunden vor einer Deaktivierung der Vorrichtung, insbesondere einer Zugregelung, und vor einer Detektierung durch eine Zugmessdose oder einen optischen Sensor, welcher im Gegensatz zur Erfindung einen Bahnabriss R möglichst früh nach einem tatsächlichen Bahnabriss R detektiert.

Obwohl die Erfindung im Detail durch bevorzugte Ausführungsbeispiele näher illustriert und beschrieben wurde, so ist die Erfindung nicht durch die offenbarten Beispiele eingeschränkt und andere Variationen können vom Fachmann hieraus abgeleitet werden, ohne den Schutzumfang der Erfindung zu verlassen.

## Patentansprüche

1. Verfahren zur Bestimmung und/oder Klassifizierung eines Bahnzustands (BZ) einer Warenbahn (1) in einer Vorrichtung, wobei die Warenbahn (1) mit mehreren Motoren (5) über mehrere Umlenkrollen (3,3') mit einer Bahngeschwindigkeit (v) bewegt wird, wobei der jeweilige Motor (5) mit einer Drehgeschwindigkeit (w) und einem Drehmoment (D) mindestens eine der Umlenkrollen (3,3') antreibt, **dadurch gekennzeichnet, dass** Momentanwerte (MW) mindestens eines Betriebsparameters (BP) mindestens eines Motors (5) erfasst und einem Bestimmungs- und/oder Klassifizierungsmodul (11) zugeführt werden, welches die erfassten Momentanwerte (MW) des mindestens einen Betriebsparameters (BP) anhand eines Lernmodells (13) analysiert und anhand dieser Analyse den Bahnzustand (BZ) der Warenbahn (1) bestimmt und/oder klassifiziert.

2. Verfahren nach Anspruch 1, wobei historische Parameterverläufe (HP(t)) und/oder historische Änderungsverläufe des mindestens einen Betriebsparameters (BP) des mindestens einen Motors (5), gegebenenfalls mit mindestens einer Markierung im Rahmen eines überwachten Lernens, erfasst, vorverarbeitet und dem Lernmodell (13) zum Anlernen oder zum Training zugeführt werden .

3. Verfahren nach Anspruch 1 oder 2, wobei anhand zeitlich nacheinander erfasster Momentanwerte (MW) des mindestens einen Betriebsparameters (BP) ein zeitlicher Momentanwertverlauf dieses Betriebsparameters (BP) bestimmt wird und mit einem zugehörigen historischen Parameterverlauf (HP(t)) dieses Betriebsparameters (BP) des Lernmodells (13) verglichen wird und anhand dieses Verlaufsvergleichs der Bahnzustand (BZ) bestimmt wird.

4. Verfahren nach einem der vorhergehenden Ansprüche, wobei das Lernmodell (13) anhand von historischen Parameterverläufen (HP(t)) die Motoren (5) im Hinblick auf ihre Relevanz für den zu ermittelnden Bahnzustand (BZ) klassifiziert und/oder selektiert.

5. Verfahren nach einem der vorhergehenden Ansprüche, wobei
- ein erster Momentanwertverlauf eines Betriebsparameters (BP) eines ersten Motors (5) erfasst wird und
- ein zweiter Momentanwertverlauf eines gleichen Betriebsparameters (BP) eines dem ersten Motor (5) benachbarten zweiten Motors (5) erfasst wird und
- Änderungen zwischen dem ersten Momentanwertverlauf und dem zweiten Momentanwertverlauf ermittelt werden und
- anhand der ermittelten Änderung der Bahnzustand (BZ) der Warenbahn (1) bestimmt wird.

6. Verfahren nach Anspruch 5, wobei eine ermittelte Änderung durch das angelernte Lernmodell (13) bewertet wird und anhand dieses Änderungsvergleichs der Bahnzustand (BZ) der Warenbahn (1) bestimmt wird.

7. Verfahren nach einem der vorherigen Ansprüche, wobei für eine Evaluierung des Lernmodells (13)
- für einen vorgegebenen Betrachtungszeitraum (T) die für diesen Betrachtungszeitraum (T) mittels des Lernmodells (13) bestimmten Bahnzustände (BZ) mit den in diesem Betrachtungszeitraum (T) identifizierten tatsächlichen Bahnzuständen (BZist) verglichen werden und
- aus diesem Vergleich ein Genauigkeitswert (23) bestimmt wird.

8. Verfahren nach einem der vorherigen Ansprüche, wobei für eine Evaluierung des Lernmodells (13)
- eine erste Zeitdifferenz (Δt1) zwischen dem Zeitpunkt (tx) der Bestimmung eines kritischen Bahnzustandes (BZ(krit) mittels des Lernmodells (13) und dem Zeitpunkt (t(r)) einer wegen eines tatsächlichen kritischen Bahnzustandes (BZ(krit)) erfolgten Deaktivierung der Vorrichtung bestimmt wird und
- anhand dieser ersten Zeitdifferenz (Δt1) ein Reaktionszeitklassifikator (29) bestimmt wird.

9. Verfahren nach Anspruch 7 oder 8, wobei das Lernmodell (13) in einem Langzeittest wiederholt evaluiert wird.

10. Computerprogrammprodukt, das dazu ausgebildet ist, ein Verfahren nach einem der vorangehenden Ansprüche auszuführen.

11. Vorrichtung zur Herstellung einer Warenbahn (1), aufweisend mindestens eine Umlenkrolle (3,3'), zumindest einen Motor (5) und eine Steuereinrichtung (7), wobei die Steuereinrichtung (7) die Herstellung der Warenbahn (1) in Abhängigkeit von dem mittels eines Verfahrens nach einem der Ansprüche 1 bis 9 bestimmten Bahnzustands (BZ) steuert oder regelt.

12. Industrielle Anlage, insbesondere Papiermaschine, aufweisend eine Vorrichtung nach Anspruch 10.
